# EUROPEAN PATENT APPLICATION

(11) **EP 3 588 221 A1**
(43) Date of publication of application: **01.01.2020**
(21) Application number: 18180880.9
(22) Date of filing: 29.06.2018
(51) Int. Cl.: G05B 19/418, G05B 23/02, C03B 29/08

(54) **METHOD FOR REAL-TIME MONITORING OF THERMAL TIME EVOLUTION OF A FURNACE ADAPTED TO THE THERMAL SOFTENING OF FLAT GLASS ARTICLES**

(71) Applicant: Saint-Gobain Glass France, 92400 Courbevoie (FR)
(72) Inventor: Herout, Benjamin, 60500 Chantilly (FR); Azehaf, Ismael, 60200 Compiègne (FR)
(74) Representative: Saint-Gobain Recherche

(57) **Abstract**

The present invention relates to a method for real-time monitoring of thermal time evolution of a furnace adapted to the thermal softening of flat glass articles. The invention also relates to a system for carrying out the said method. The method of the invention is particularly convenient for high productions rates. It allows reducing the reacting time between the detection of temperature drifts in the furnace and the adjustment of the settings of said furnace. The risk for a production shutdown or disruption is reduced.

## Description

### Technical Field

The present invention relates to the field of thermal softening of flat glass articles. It relates more specifically to the thermal softening of flat glass articles before, for example, a bending or a shaping step in a manufacturing process of car windows, for example, windshields, side windows or rear windows.

### Background Art

In glass bending process the flat glass articles are often thermally softened before the bending step. This thermal softening step is a critical step because it prevents the breaking of the flat glass articles upon bending and has an impact on the final optical quality of the bended articles.

In particular, for bended glass articles for which high optical quality is required for sight applications, the thermal softening has to be carried off carefully otherwise shifts of the optical centres and/or variations of refractive index may occur which would distort the vision.

For example, glass windshields are usually made of two bended sheets of glass laminated with a polymer layer interposed between them. In the manufacturing process, if, before and during the bending step, the temperature is not homogeneous or the temperature gradients are not carefully controlled within the sheets of glass, the optical centres of the windshields may not coincide with the curvature locus of sight, and strong optical distortions may form. Such optically distorted windshields have to be rejected because the security of conductor and passengers may be seriously compromised during use.

However, the normal wear and tear or abnormal disrupting of the heating elements or sections of the furnace can make the temperature within the furnace shift gradually or abruptly. Temperature anomalies can occur within flat glass articles that may impinge on the final properties of the bended glass article.

Thus, it would be highly valuable to monitor the thermal time evolution of the furnace in order to detect any temperature drift. An early detection of any critical temperature drift would allow correcting it rapidly and then prevent or, at least limit the amount, of rejected articles.

### Summary of invention

The present invention relates to a computer implemented method for real-time monitoring of thermal time evolution of a furnace adapted to the thermal softening of flat glass articles. The invention also relates to a system for carrying out the said method.

### Technical Problem

The continuous improvement of bending processes make the production rate of bended glass articles continuously and steadily increase. Production rates around 4 to 20 articles every minute are common. At the exit of the thermal softening furnace, the available time between two flat glass articles usually ranges between 2 to 15 seconds. The average motion speed of the glass articles is between 500mm to 2000mm per second. The length of the flat glass articles usually varies from 150mm and 1400mm.

The reacting time between the detection of temperature drifts and the adjustment of the thermal settings of the thermal softening furnace to eliminate them is critical. A short reaction time is advantageous to act on the furnace in order to reduce the amount of rejected articles. Ideally any production shutdown or disruption to maintain or repair the furnace should be avoided as being economically disastrous. It would then be highly valuable to anticipate any temperature drifts in order to allow continuous preventive maintenance of the furnace so as to prevent any unwanted production rejection and/or shutdown.

### Solution to Problem

The present invention solves the aforementioned problem by providing a method for real-time monitoring of thermal time evolution of a furnace adapted to the thermal softening of flat glass articles. The method allows an early detection and/or an anticipation of temperature drift within a thermal softening furnace by a continuous real-time monitoring and statistical analysis of the temperature of surfaces of the softened flat glass articles at the exit of said furnace.

### Advantageous effect of invention

The method of the invention is particularly convenient for high productions rates. It allows reducing the reacting time between the detection of temperature drifts and the adjustment of the settings of the thermal softening furnace. By anticipating the thermal drift, the settings of the thermal softening furnace can be more rapidly adjusted and the requirements for a maintenance be better anticipated. The risk for a production shutdown or disruption can then be reduced.

### Brief description of drawings

Figure 1 is a schematic of an example of a bending process of flat glass articles.
Figure 2 is a logical data flow chart of a method for real-time monitoring of thermal time evolution of a furnace adapted to the thermal softening of flat glass articles according to a first example embodiment of the invention.
Figure 3 is a logical data flow chart of a first detailed example of the step (5) of the Figure 2.
Figure 4 is a logical data flow chart of a second detailed example of the step (5) of the Figure 2.
Figure 5 is a logical flow chart of a method for real-time monitoring of thermal time evolution of a furnace adapted to the thermal softening of flat glass articles according to a second example embodiment of the invention.
Figure 6 is an example of physical data flow chart to computer implement a method for real-time monitoring of thermal time evolution of a furnace adapted to the thermal softening of flat glass articles.
Figure 7 is an example of system for real-time monitoring of thermal time evolution of a furnace adapted to the thermal softening of flat glass articles in motion in a first direction.
Figure 8 is a graphical representation of an example of real-time updated dataset of temperature maximums and the temperature minimums for a series of flat glass articles at the exit of a furnace adapted to the thermal softening of flat glass articles.
Figure 9 is an example of graphical representation of a real-time updated dataset of the spatial coordinates of the temperature maximums and temperature minimums for a series of flat glass articles at the exit of a furnace adapted to the thermal softening of flat glass articles.

### Description of embodiments

It is now referred to the drawings in which the reference numbers indicate elements throughout the several views.

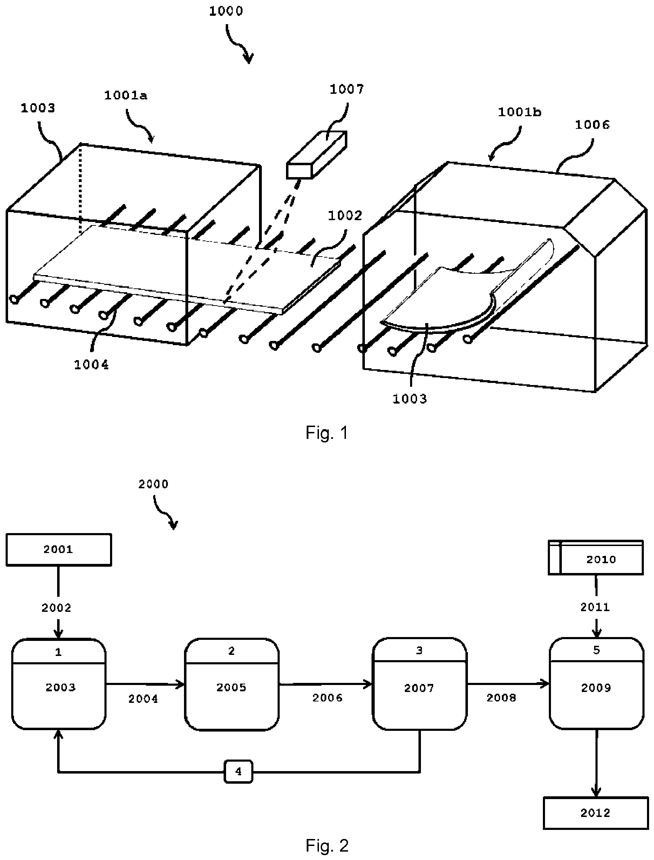

Figure 1 illustrates a classic bending process of flat glass articles. The bending process 1000 comprises a first stage 1001a of thermal softening of a flat glass article 1002 in a furnace 1003 adapted to the thermal softening of flat glass articles, and a second stage 1001b of bending said softened flat glass articles 1003 in a bending machine 1006. The flat glass article 1002 is in motion inside the furnace 1003 thanks to conveyor means 1004 like roller conveyors. The conveyor means 1004 convey the flat glass article 1002 from the furnace 1003 to the bending machine 1006.

The temperature of the flat glass article 1003 at the exit of the furnace 1003 can be measured by a thermal radiation measuring device 1007. The thermal radiation measuring devices 1007 allow checking the temperature of flat glass articles 1003 before the bending step 1001b. An example of thermal radiation measuring device is described in the patent application FR2554587A.

In a first embodiment of the present invention, illustrated on the Figure 2, it is provided a computer implemented method 2000 for real-time monitoring of thermal time evolution of a furnace 1003 adapted to the thermal softening of flat glass articles in motion in a first direction, using, as input, a plurality of temperature profiles of the surface of said flat glass articles, each temperature profile being acquired at the exit of the furnace, in a second direction at an angle between 45° and 90°, preferably between 80° and 90° with said first direction, and with an acquisition rate such that a temperature profile is acquired every 2mm to 15mm of each of flat glass article along said first direction, said method comprising the following steps:
1. the collection 2003 of temperature profiles 2002 of a flat glass article 2001 to form a thermogram 2004 of said flat glass article 2001 ;
2. the spatial localisation 2005 in said thermogram 2004 of the spatial coordinates and values 2006 of temperature maximum and temperature minimum;
3. the recording 2007 of the spatial coordinates and values 2006 of the temperature maximum and the temperature minimum localized at step (2);
4. the iteration of steps (1) to (3) for each of flat glass articles so as to form a real-time updated dataset 2008 of spatial coordinates and values of temperature maximums and temperature minimums;
5. the real-time statistical analysis 2009 of said real-time updated dataset 2008 so as to provide, as output 2012, a dataset indicating that the time evolution of the structure of the said real-time updated dataset 2008 follows a defined behaviour law 2010 provided as input 2011.

The temperature profiles can be provided by the use of acquisition devices such as, for example, a linear thermal radiation measuring device.

The number of temperature profiles acquired per flat glass article is function of the acquisition rate of the acquisition device used for this operation. The higher is the acquisition rate of the acquisition device, the higher is the temperature resolution of the thermogram for each flat article.

The thermogram comprises advantageously enough temperature profiles to be representative of the temperature variation at the surface of the flat glass articles. It depends on the size and the motion rate of the flat articles. Advantageously a temperature profile is to be acquired every 2mm to 15mm of the flat glass article along the direction of motion of the flat glass articles, preferably every 3mm to 10mm.

A temperature profile is generally a list of temperature - spatial coordinates tuples representing the variation of temperature of the surface of a flat glass articles along one or more spatial directions. In the present invention, the temperature profiles are lists of temperature - spatial coordinates tuples along the second direction at an angle between 45° and 90°, preferably between 80° and 90° with the first direction of motion of the flat glass articles.

A thermogram is a collection of temperature profiles forming a 2D data matrix of temperature values which dimensions represents the spatial coordinates along the first direction of motion of the flat glass articles and the second direction. The flat glass articles being in motion, the spatial coordinates in the direction of motion are correlated to time by the motion rate of the said flat glass articles, the acquisition frequency of temperature profiles, the recording time of the step (3), or a combination thereof. In the thermogram, the spatial coordinates along that direction can then alternatively be replaced by time.

On the Figure 2, the output 2012 of the method, obtained after the step (5), can be, for example, a Boolean value. This value can be transmitted, for example, as a logical instruction to a regulating control system (not shown) of the furnace in order to stop the whole manufacturing process or to change some regulating parameters for heating.

Alternatively, the output 2012 can be any kind of logical and/or numerical data that can be processed by the regulating control system of the furnace. The data can be transmitted directly or indirectly, for example after numerical and/or logical operations, to the regulating control system.

The behaviour law 2010 is provided as an input 2011 at the step (5) of the method. The behaviour law depends on the kind of furnace used for the thermal softening and the required sensibility in the monitoring of the thermal time evolution. For example, the behaviour law can be a mathematic model or a database to which the time evolution of the structure of the real-time updated dataset is compared at the step (5).

In an embodiment of the invention, the defined behaviour law is a set of thresholds for the spatial coordinates and/or for the values of the temperature maximums and/or temperature minimums, and the time evolution of the structure of the said real-time updated dataset does not follow said behaviour law when the spatial coordinates and/or the values of the temperature maximums and/or temperature minimums in said real-time updated dataset are outside the interval defined by said thresholds.

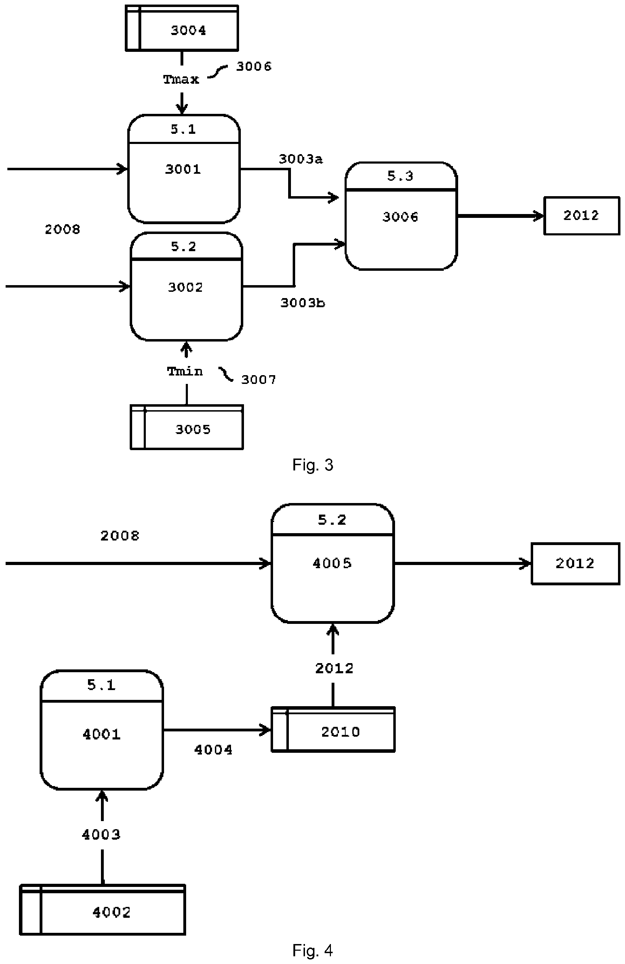

As an example illustrated on Figure 3, the real-time statistical analysis of the step (5) comprises three sub-steps 3001, 3002 and 3006. The behaviour law 2010 is two thresholds, Tmax 3004 and Tmin 3005 which are respectively maximum and minimum values for temperature. They were previously set and provided as inputs 3006 and 3007.

The real-time updated dataset 2010 is first transmitted to the two sub-steps 3001 and 3002. The two sub-steps 3001 and 3002 compare the temperature values of the dataset 2008 to the two thresholds, Tmax 3006 and Tmin 3007. The outputs of the two sub-steps 3001 and 3002 are Boolean values that are provided as inputs 3003a and 3003b to a third sub-step 3006 corresponding, for example, to a Boolean operation 'OR'. The output of this third sub-step is a Boolean value 2012. If any or both conditions in the sub-steps 3001 and 3002 are fulfilled, the Boolean value 2012 is True, i.e. the real-time updated dataset 2008 does not follow the defined behaviour law 3004 and 3005. If the conditions are not fulfilled, the Boolean value 2012 is False.

Alternatively, in another embodiment of the invention, the defined behaviour law is a time evolution law defined from the structure of an external dataset of spatial coordinates and/or values of temperature maximums and/or temperature minimums of flat glass articles softened in a furnace with no temperature drift, and the time evolution of the structure of the said real-time updated dataset does not follow said behaviour law when the time evolution of the structure of the said real-time updated dataset is outside the15%, preferably 10%, preferably 5% of the margin errors of said time evolution law.

As an example illustrated on Figure 4, the real-time statistical analysis of the step (5) comprises two sub-steps 4001 and 4005. First, a dataset 4002 is provided as an input 4003 to the sub-step 4001. The dataset 4002 is a complete or a sample of an external dataset 4002 of spatial coordinates and/or temperature maximums and/or temperature minimums corresponding to a furnace with no temperature drift. The sub-step 4001 computes or calculates from the dataset 4002 a time evolution law 4004 which is afterwards provided as a behaviour law 2010.

The time evolution law 4004 can be calculated by the help of mathematical regression models like linear regression models, multilinear regression models, support vector machines, kernel ridge regression models or ensembles methods depending on the amount of data in the external dataset and the complexity of its structure.

It is not necessary to determine the behaviour law 2010 each time the method of the invention is used. Instead, the behaviour law 2010 can be computed once and stored for future use. This allows reducing the amount of time and computing resources to implement the method.

The behaviour law 2010 is provided as input 2011 to sub-step 4005 which will check if the time evolution of the structure of the real-time updated dataset 2008 follows said behaviour law 2010. To do so, the same mathematical regression models as those used in the sub-step 4001 for the definition of the time evolution law 4004 can be used. A trend of the time evolution of the structure of the real-time updated dataset 2008 can, for example, be determined which is then compared to the behaviour law 2010. If this trend is inside the15%, preferably 10%, preferably 5% of the margin errors of said time evolution law 2010, the output 2012 can be a Boolean value set to False, otherwise, i.e. this trend is outside the15%, preferably 10%, preferably 5% of the margin errors of said time evolution law 2010, the output is set to True.

The field of view of thermal radiation measuring devices used to acquire temperatures profiles of the flat glass articles may be eventually larger than the sizes of said flat glass articles. The main drawback is that the temperature of the surrounding environment, on one or both sides of the flat glass article, is also measured. The surrounding environment being often much cooler than the flat glass article, artefacts may sometimes arise during the step (2) of the method for the spatial localisation of temperature minimum. These artefacts are called edge effects.

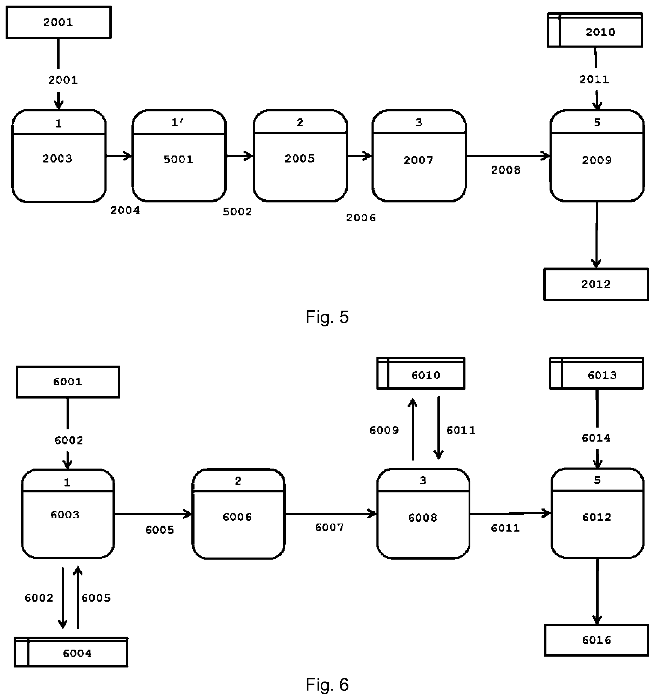

An embodiment of the present invention, exemplified by the logical data flowchart of the Figure 5, provides an example of solution to this problem. The method may further comprise, between step (1) 2003 and step (2) 2005, a computer implemented step (1') 5001 of image analysis segmentation for detection and removing of the edge effects of the flat glass article from the thermogram 2004. This step (1') provides as output an optimized thermogram 5002 which is provided as input to the step (2) 2005.

The image analysis segmentation can be performed using a method chosen from thresholding methods, random walker segmenting methods, conjugated gradients random walker segmenting methods, active contour methods or watershed methods. The segmenting method is preferably a conjugated gradients random walker segmenting method.

In another embodiment of the present invention, the method of the invention can further comprise, after step (5), a step (6) of computer implemented calculation of regulating parameters so as, when the said calculated regulating parameters are transmitted to a regulating control system of the furnace adapted to the thermal softening of flat glass articles, the time evolution of the structure of the said real-time updated dataset follows the defined behaviour law.

Furnaces adapted to thermal softening of flat glass article often differs to each other by their technical features, design, and thermal history. The regulation parameters and methods must often be adapted to each furnace in order to handle their different heating behaviour. For example, they often use different values of regulating parameters in their regulating control system in order to make them provide the same temperature. These values must often be change during the lifetime of the furnace.

It would be an advantage if, for each furnace, the regulation parameters could be continuously adjusted depending on the thermal drifts that could occur or potentially occur. Doing so, these drifts may be continuously anticipated and corrected by a new set of regulating parameters.

A solution is provided when, in the above described embodiment of the invention when, in the step (6), the regulating parameters are adjusted according to a correlation law derived from the statistical analysis of the said regulating parameters of the furnace, the time and/or spatial evolution of the structure of a previously recorded dataset of spatial coordinates and/or values of temperature maximums and/or temperature minimums for the said furnace and the real-time updated dataset of step (4).

The said statistical analysis is advantageously performed by a supervised or non-supervised machine learning regression method.

In a certain embodiment of the invention, the method can further comprise, before step (1), an acquisition step (0) of a plurality of temperature profiles of the surface of said flat glass articles, each temperature profile being acquired at the exit of the furnace, in a second direction at an angle between 45° and 90°, preferably between 80° and 90° with the first direction, and with an acquisition rate such that a temperature profile is acquired every 2mm to 15mm of each of flat glass article in the first direction.

The method of the present invention is computer implemented. Another object of the present invention is a computer program comprising instructions which, when they are executed by a computer, cause the computer to carry out a method for real-time monitoring of thermal time evolution within a furnace according to any of the embodiments described herein.

Figure 6 provides an example of physical data flow chart to computer implement a method for real-time monitoring of temperature drift within a furnace adapted to the thermal softening of flat glass articles.

The method can be implemented as follows.
1. A collection process 6003 collects temperature profiles 6001 provide as input 6002 and store them in a temporary transfer file 6004 to form a thermogram for a glass article. The thermogram is made of the plurality of temperature profiles 6001 corresponding to the surface of said flat glass article.
2. Each thermogram 6005 is retrieved from the temporary transfer file 6004 and provided as input to a spatial localisation process 6006. The spatial localisation process 6006 determines the values and spatial coordinates 6007 of the temperature maximum and minimum within the thermogram 6005 by comparison of the temperature values at any point of the thermogram 6005 to each other.
3. The values and spatial coordinates 6007 are provided as input to the recording process 6008 which continuously stores the input data 6009 in a database file 6010 in order to form a real-time updated dataset of spatial coordinates and values of temperature maximums and temperature minimums.
4. The real-time updated dataset 6011 is continuously retrieved from the database files 6010 and provided as input to a real-time statistical comparison process 6012.
5. A real-time statistical analysis process 6012 of said real-time updated dataset 6011 provides, as output 2016, a dataset indicating that the time evolution of the structure of the said real-time updated dataset 6011 follows a defined behaviour law 6014 provided as input to the process 6012. The defined behaviour law 6014 can be retrieved from a database or provided as mathematical model 6013.

Any kind of programming language, either compiled or interpreted, can be used to implement the steps of the method of the invention. The computer program can be part of a software solution, i.e. part of a collection of executable instructions, code, scripts or the like and/or databases.

The processes 6003, 6006, 6008 and 612, and the processes corresponding to the steps provided in the embodiments of the invention described hereinbefore can be advantageously coded in a programme or software as instanced objects from adapted classes in the memory of the computer.

Another object of the invention is a computer-readable medium-storage comprising instructions which, when executed by a computer, cause the computer to carry out a method for real-time monitoring of thermal time evolution of a furnace according to any of the embodiments described herein.

The computer-readable storage is preferably a non-volatile storage or memory, for example hard disk drive or solid-state drive. The computer-readable storage can be removable storage media or a non-removable storage media as part of a computer.

Alternatively the computer-readable storage may be a volatile memory inside a removable media. This can facilitate the deployment of the invention into many manufacturing sites.

The computer-readable storage can be part of a computer used as a server from which executable instructions can be downloaded and, when they are executed by a computer, cause the computer to carry out a method for real-time monitoring of thermal time evolution of a furnace according to any of the embodiments described herein.

Alternatively, the instructions can be executed on the server to which clients computers can connect and upload data, like temperature profiles or thermogram. Once data are processed, the output can be downloaded onto the clients computer or directly send, for example, to a regulating control system of the furnace. This is kind of implementation can be advantageous as it can be part of a cloud computing solution.

An object of the invention is also to provide a system which can be used to implement the method described hereinbefore.

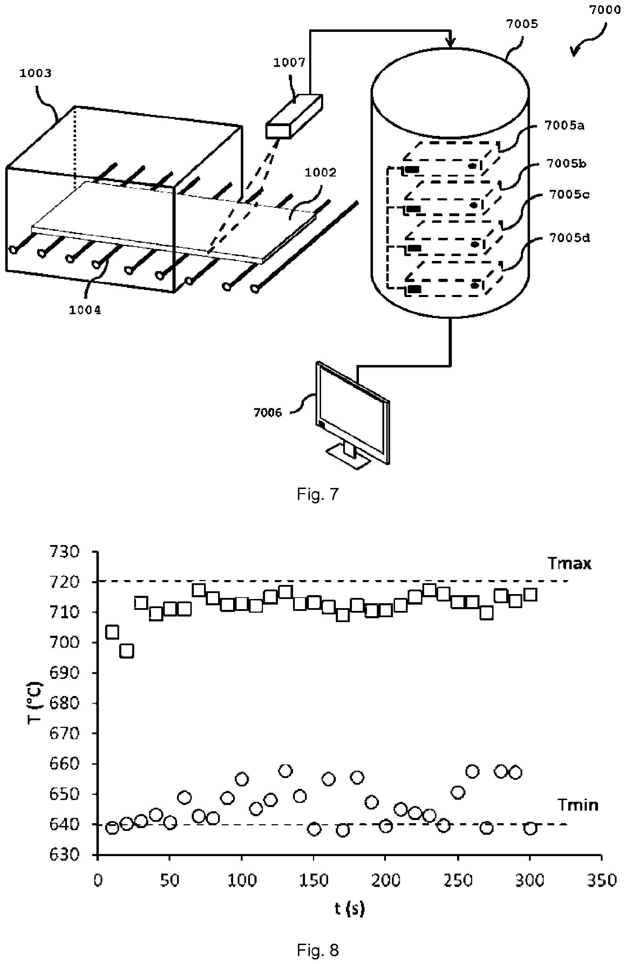

The said system is exemplified on the Figure 7. It is a system 7000 for real-time monitoring of thermal time evolution of a furnace 1003 adapted to the thermal softening of flat glass articles in motion in a first direction. Said system 7000 using as input a plurality of temperature profiles of the surface of said flat glass articles, each temperature profile being acquired at the exit of the furnace, in a second direction at an angle between 45° and 90°, preferably between 80° and 90° with said first direction, and with an acquisition rate such that a temperature profile is acquired every 2mm to 15mm of each of flat glass article in said first direction. The said system 7000 comprises:
1. a collection device 7005a of a thermogram of a flat glass article 1002, said thermogram being made of temperature profiles thereof;
2. a data processing device 7005b comprising means to spatially localize the temperature maximum and the temperature minimum in said collected thermogram;
3. a data recording device 7005c of the spatial coordinates and values of temperature maximum and temperature minimum provided by the data processing device 7005b.
4. a data processing device 7005d comprising means for carrying out the real-time statistical analysis of said real-time updated dataset so as to provide, as output, a dataset indicating that the time evolution of the structure of the said real-time updated dataset follows a defined behaviour law provided as input.

In a certain embodiment of the invention, the system 7000 can further comprise an acquisition device 1007 comprising at least one infrared temperature scanner. Said acquisition device can acquire a plurality of temperature profiles of the surface of said flat glass articles, each temperature profile being acquired at the exit of the furnace, in a second direction at an angle between 45° and 90°, preferably between 80° and 90° with the first direction, and with an acquisition rate such that a temperature profile is acquired every 2mm to 15mm of each of flat glass article in the first direction.

The collection device 7005a, the two data processing devices 7005b and 7005d, and the data recording device 7005c can be part of a main device 7005. The main device 7005 can be a computer wherein the said data processing and recording devices are virtual devices instanced as objects from coded classes comprised in a computer program. The said computer program comprises instructions which, when they are executed by the computer, create objects corresponding to the said data processing and recording devices which make the computer carry out the method of the invention.

Using a single computer, said devices being instanced virtual devices within said computer makes the system compact, mobile and then easier to deploy.

In the scope of the invention, a computer is a device which can be instructed to carry out sequences of arithmetic or logical operations automatically to perform tasks or actions. A computer generally comprises one or more Central Processing Unit (CPU) and at least a controller device that are adapted to perform those operations. It can further comprise other electronic components like input/output interfaces, non-volatile storages devices, and buses that are communication systems for the data transfer between components inside a computer, or between computers. One of the input/output devices can be user interface for human-machine interaction, for example graphical user interface to display human understandable information.

In a certain embodiment of the system of the invention, the said system 7000 can further comprise a data processing device comprising means to carry out an image analysis segmentation of thermogram for detection and removing of edge effects of the flat glass article from said thermogram. This said data processing device can also be virtual device instanced as an object from coded classes by the same computer as that is used for the other above described devices.

In another embodiment of the system of the invention, the said system can further comprise a graphical user interface 7006, as illustrated on the Figure 7, which displays the time evolution of the real-time updated dataset of spatial coordinates and/or values of temperature maximum and/or temperature minimum.

The graphical user interface can be displayed on a screen, a touch screen or the like whereon the time evolution of the structure of the real-time updated dataset of spatial coordinates and/or values of temperature maximum and/or temperature minimum is continuously displayed as human understandable data through, for example, real-time plotting.

Alternatively, the data processing devices and the data recording device can be physical devices implemented as components in a low-level controller.

The method of the invention can be advantageously implemented in a glass bending process, such as used for the manufacturing of car windshields or car windows.

Such glass bending process of flat glass articles can comprise the following steps:
1. the provision of flat glass articles;
2. the thermal softening of the flat glass articles in a furnace adapted to the thermal softening of flat glass articles, said flat glass article being in motion in a first direction in said furnace;
3. the acquisition of a plurality of temperature profiles of the surface of said flat glass articles, each temperature profile being acquired at the exit of the furnace, in a second direction at an angle between 45° and 90°, preferably between 80° and 90° with the first direction, and with an acquisition rate such that a temperature profile is acquired every 2mm to 15mm of each of flat glass article in the first direction;
4. the computer implemented collection of a thermogram for a flat glass article, said thermogram being made of temperature profiles thereof;
5. the computer implemented spatial localisation of a temperature maximum and a temperature minimum in said collected thermogram;
6. the computer implemented recording of the spatial coordinates and values of the maximum temperature and minimum temperature localized at step (5);
7. the iteration of steps (4) to (6) for each of flat glass articles so as to form a real-time updated dataset from spatial coordinates and values of temperature maximums and temperature minimums;
8. the computer implemented real-time statistical analysis of said real-time updated dataset so as to provide, as output, a dataset indicating that the time evolution of the structure of the said real-time updated dataset (2008) follows a defined behaviour law provided as input;
9. the computer implemented calculation of regulating parameters depending on the output of step (8) so as, when the said calculated regulating parameters are transmitted to a regulating control system for the furnace adapted to the thermal softening of flat glass articles, the time evolution of the structure of said real-time updated dataset follows the previously defined behaviour law;
10. the bending of said flat glass articles into shape.

### Example

The advantages of the invention are illustrated by the example described hereinafter.

An infrared linear scanner with an acquisition rate of 50Hz is used to acquire temperature profiles of the surface flat glass articles at the exit of a furnace adapted to the thermal softening of flat glass articles. The flat glass articles are in motion at an average motion speed between 800 to 1000 mm per second. The time between two flat glass articles was around 10 seconds.

The temperature profiles were acquired in a direction perpendicular to the motion direction, every 5mm of the flat glass articles in the direction of motion. They are thereafter provided as input to the method of the invention.

The temperature profiles are collected to form a thermogram for each flat glass article according to the method of the invention. The time interval between two thermograms is 10 seconds.

The temperature maximum and the temperature minimum of the surface of each flat glass article are spatially localized by comparison of the temperature values at any point of the corresponding thermogram to each other. The spatial coordinates and values of the maximum temperature and minimum temperature localized are afterwards recorded and, by iteration, a real-time updated dataset of spatial coordinates and values of temperature maximums and temperature minimums is formed.

On Figure 8, temperature minimums (squares) and temperature maximums (circles) of the said dataset are plotted against time. The abscissa is time and the ordinate is temperature in Celsius.

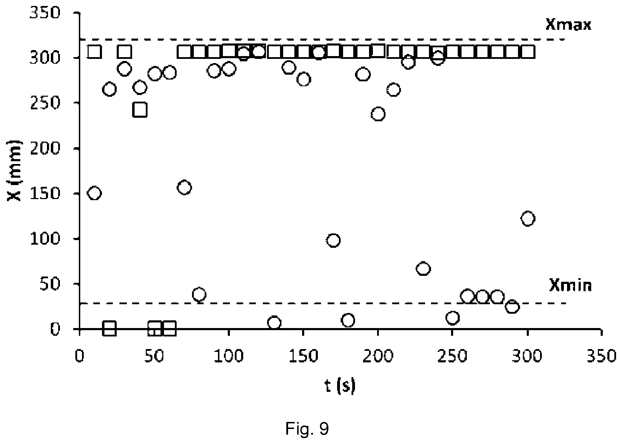

On Figure 9, the spatial coordinates of the temperature minimums and maximum along the direction perpendicular to the motion direction of the flat glass articles are plotted against time. The abscissa is time and the ordinate is the position of temperature maximum and minimum along the direction perpendicular to the direction of motion of the flat glass articles.

In the example, the behaviour law used in statistical analysis step is a set of thresholds for the spatial coordinates and for the values of the temperature maximums and/or temperature minimums. On Figure 8, the thresholds are illustrated by the two dashed lines Tmax and Tmin. On the Figure 9, they are illustrated by the dashed lines Xmax and Xmin.

A temperature drift is detected every time one of the values of temperature minimum and maximum are respectively beyond Tmax and Tmin, or every time one of the spatial coordinates of temperature minimum and maximum are outside the Xmin - Xmax interval. The cases appear several times in the dataset represented on the Figure 8 and Figure 9.

In other example, the behaviour law can be defined so that a temperature drift is detected when the frequency at which the values or spatial coordinates of the temperature minimum and maximums are respectively beyond Tmin and Tmax and outside the Xmin-Xmax interval. In the present case, if those values or spatial coordinates are more than five times per 150 seconds outside the thresholds, a temperature drift is detected. There is no case in the dataset represented on the Figure 8 and Figure 9.

This example shows that the method of the invention allows an early detection of thermal drift within a thermal softening furnace. The temperature drifts being detected during the process at the exit of the furnace, the risk for a production shutdown or disruption can then be reduced.

It is to be understood that the embodiments described herein are the most preferred embodiments to describe the invention. These embodiments can be combined unless their respective functions appear incompatible for such combination.

It is to be further understood that the invention is not limited to the disclosed embodiments. It is intended to cover equivalent arrangements included within the scope of the claims.

## Claims

1. A computer implemented method for real-time monitoring of thermal time evolution of a furnace adapted to the thermal softening of flat glass articles in motion in a first direction using, as input, a plurality of temperature profiles of the surface of said flat glass articles, each temperature profile being acquired at the exit of the furnace, in a second direction at an angle between 45° and 90°, preferably between 80° and 90° with said first direction, and with an acquisition rate such that a temperature profile is acquired every 2mm to 15mm of each of flat glass article in said first direction, said method comprising the following steps:
1. the collection (2003) of temperature profiles (2002) of a flat glass article (2001) to form a thermogram (2004) of said flat glass article (2001);
2. the spatial localisation (2005) in said thermogram (2004) of the spatial coordinates and values (2006) of temperature maximum and a temperature minimum;
3. the recording (2007) of the spatial coordinates and values (2006) of the temperature maximum and the temperature minimum localized at step (2);
4. the iteration of steps (1) to (3) for each of flat glass articles so as to form a real-time updated dataset (2008) from spatial coordinates and values of temperature maximums and temperature minimums;
5. the real-time statistical analysis (2009) of said real-time updated dataset (2008) so as to provide, as output (2012), a dataset indicating that the time evolution of the structure of the said real-time updated dataset (2008) follows a defined behaviour law (2010) provided as input (2011).

2. A computer implemented method for real-time monitoring of thermal time evolution of a furnace according to the claim 1, wherein the defined behaviour law is a set of thresholds for the spatial coordinates and/or for the values of the temperature maximums and/or temperature minimums, and wherein the time evolution of the structure of the said real-time updated dataset does not follow said behaviour law when the spatial coordinates and/or values of the temperature maximums and/or temperature minimums in said real-time updated dataset are outside the interval defined by said thresholds.

3. A computer implemented method for real-time monitoring of thermal time evolution of a furnace according to the claim 1, wherein the defined behaviour law is a time evolution law defined from the structure of an external dataset of spatial coordinates and/or values of temperature maximums and/or temperature minimums of flat glass articles softened in a furnace with no thermal drift, and wherein the time evolution of the structure of the said real-time updated dataset does not follow said behaviour law when the time evolution of the structure of the said real-time updated dataset is outside the15%, preferably 10%, preferably 5% of the margin errors of said time evolution law.

4. A computer implemented method for real-time monitoring of thermal time evolution of a furnace according to any of the claims 1 to 3, said method further comprises, between step (1) and step (2), a computer implemented step (1') of image analysis segmentation for detection and removing of the edge effects of the flat glass article from the thermogram.

5. A computer implemented method for real-time monitoring of thermal time evolution of a furnace according to any of the claims 1 to 4, wherein the image analysis segmentation is performed using a method chosen from thresholding methods, random walker segmenting methods, conjugated gradients random walker segmenting methods, active contour methods or watershed methods.

6. A computer implemented method for real-time monitoring of thermal time evolution of a furnace according to any of the claims 1 to 5, said method further comprises, after step (5), a step (6) of computer implemented calculation of regulating parameters so as, when the said calculated regulating parameters are transmitted to a regulating control system of the furnace adapted to the thermal softening of flat glass articles, the time evolution of the structure of the said real-time updated dataset follows the defined behaviour law.

7. A computer implemented method for real-time monitoring of thermal time evolution of a furnace according to claim 6, wherein, in the step (6), the regulating parameters are adjusted according to a correlation law derived from the statistical analysis of said regulating parameters of the furnace, the time and/or spatial evolution of the structure of a previously recorded dataset of spatial coordinates and/or values of temperature maximums and/or temperature minimums for the said furnace and the real-time updated dataset of step (4).

8. A computer implemented method for real-time monitoring of thermal time evolution of a furnace according to claim 7, wherein the real-time statistical comparison is performed by supervised or non-supervised machine learning regression methods.

9. A computer implemented method for real-time monitoring of thermal time evolution of a furnace according to any of claims 1 to 8, said method further comprises, before step(1), an acquisition step (0) of a plurality of temperature profiles of the surface of said flat glass articles, each temperature profile being acquired at the exit of the furnace, in a second direction at an angle between 45° and 90°, preferably between 80° and 90° with the first direction, and with an acquisition rate such that a temperature profile is acquired every 2mm to 15mm of each of flat glass article in the first direction.

10. A computer program comprising instructions which, when they are executed by a computer, cause the computer to carry out a method for real-time monitoring of thermal time evolution of a furnace according to any of the claims 1 to 9.

11. A computer-readable storage medium comprising instructions which, when executed by a computer, cause the computer to carry out a method for real-time monitoring of thermal time evolution of a furnace according to any of the claims 1 to 9.

12. A system (7000) for real-time monitoring of thermal time evolution of a furnace (1003) adapted to the thermal softening of flat glass articles in motion in a first direction, said system (7000) using as input a plurality of temperature profiles of the surface of said flat glass articles, each temperature profile being acquired at the exit of the furnace, in a second direction at an angle between 45° and 90°, preferably between 80° and 90° with said first direction, and with an acquisition rate such that a temperature profile is acquired every 2mm to 15mm of each of flat glass article in said first direction, said system (7000) comprising:
1. a collection device (7005a) of a thermogram of a flat glass article (1002), said thermogram being made of temperature profiles thereof;
2. a data processing device (7005b) comprising means to spatially localize the temperature maximum and the temperature minimum in said collected thermogram;
3. a data recording device (7005c) of the spatial coordinates and values of temperature maximum and temperature minimum provided by the data processing device (7005b);
4. a data processing device (7005d) comprising means for carrying out the real-time statistical analysis of said real-time updated dataset so as to provide, as output, a dataset indicating that the time evolution of the structure of the said real-time updated dataset follows a defined behaviour law provided as input.

13. A system for real-time monitoring of thermal time evolution of a furnace according to the claim 12, wherein said system further comprises a data processing device comprising means to carry out an image analysis segmentation of thermogram for detection and removing of edge effects of the flat glass article from said thermogram.

14. A system for real-time monitoring of thermal time evolution of a furnace according to any of the claims 12 to 13, wherein said system further comprises an acquisition device comprising at least one infrared temperature scanner, said acquisition device acquiring a plurality of temperature profiles of the surface of said flat glass articles, each temperature profile being acquired at the exit of the furnace, in a second direction at an angle between 45° and 90°, preferably between 80° and 90° with the first direction, and with an acquisition rate such that a temperature profile is acquired every 2mm to 15mm of each of flat glass article in the first direction.

15. A system for real-time monitoring of thermal time evolution of a furnace according to any of the claims 11 to 13, wherein the said system further comprises a graphical user interface which displays the time evolution of the real-time updated dataset of spatial coordinates and/or values of temperature maximum and/or temperature minimum.

16. A glass bending process of flat glass articles comprising the following steps:
1. the provision of flat glass articles;
2. the thermal softening of the flat glass articles in a furnace adapted to the thermal softening of flat glass articles, said flat glass article being in motion in a first direction in said furnace;
3. the acquisition of a plurality of temperature profiles of the surface of said flat glass articles, each temperature profile being acquired at the exit of the furnace, in a second direction at an angle between 45° and 90°, preferably between 80° and 90° with the first direction, and with an acquisition rate such that a temperature profile is acquired every 2mm to 15mm of each of flat glass article in the first direction;
4. the computer implemented collection of a thermogram for a flat glass article, said thermogram being made of temperature profiles thereof;
5. the computer implemented spatial localisation of a temperature maximum and a temperature minimum in said collected thermogram;
6. the computer implemented recording of the spatial coordinates and values of the maximum temperature and minimum temperature localized at step (5);
7. the iteration of steps (4) to (6) for each of flat glass articles so as to form a real-time updated dataset from spatial coordinates and values of temperature maximums and temperature minimums;
8. the computer implemented real-time statistical analysis of said real-time updated dataset so as to provide, as output, a dataset indicating that the time evolution of the structure of the said real-time updated dataset (2008) follows a defined behaviour law provided as input;
9. the computer implemented calculation of regulating parameters depending on the output of step (8) so as, when the said calculated regulating parameters are transmitted to a regulating control system for the furnace adapted to the thermal softening of flat glass articles, the time evolution of the structure of said real-time updated dataset follows the previously defined behaviour law
10. the bending of said flat glass articles into shape.
